## Europäisches Patentamt

(19) **European Patent Office**

**Office européen des brevets**

(11) Veröffentlichungsnummer: **0 099 072**
**B1**

(12) ## EUROPÄISCHE PATENTSCHRIFT

(45) Veröffentlichungstag der Patentschrift:
03.05.89

(51) Int. Cl.⁴: **G 06 K 17/00**

(21) Anmeldenummer: **83106643.6**

(22) Anmeldetag: **07.07.83**

(54) Vorrichtung zur Kontrolle des Ausganges und/oder des Einganges von Waren.

(30) Priorität: **12.07.82 DE 3226014**

(43) Veröffentlichungstag der Anmeldung:
**25.01.84 Patentblatt 84/4**

(45) Bekanntmachung des Hinweises auf die Patenterteilung:
**03.05.89 Patentblatt 89/18**

(84) Benannte Vertragsstaaten:
**BE CH FR GB IT LI NL SE**

(56) Entgegenhaltungen:
**EP-A- 0 052 306**
**FR-A- 2 494 466**
**GB-A- 1 477 099**
**GB-A- 2 068 536**

(73) Patentinhaber: **PRIVATES INSTITUT FÜR PHYSIKALISCH TECHNISCHE AUFTRAGSFORSCHUNG GMBH, Im Seesengrund 16, D-6105 Ober-Ramstadt (DE)**

(72) Erfinder: **Pejas, Wolfram, Dr., Breubergstrasse 14, D-6107 Reinheim 1 (DE)**
Erfinder: **Liehmann, Jörg, Dipl.-Phys., Flughafenstrasse 3A, D-6103 Griesheim (DE)**
Erfinder: **Brauch, Ulrich, Dipl.-Ing., Rossbergring 163, D-6107 Reinheim 5 (DE)**

(74) Vertreter: **Pöhner, Wilfried Anton, Dr., Kaiserstrasse 27 Postfach 63 23, D-8700 Würzburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zur Kontrolle des Ausganges und/oder Einganges von Waren gemäß dem Oberbegriff des Patentanspruches 1.

Vorrichtungen der gattungsgemäßer Art lassen sich aus der EP-A-52 306 entnehmen, bei denen im Lesestift Infrarotsender und -empfänger unmittelbar im Lesestift untergebracht sind. Dies hat zur nachteiligen Folge, daß die Handhabung der Vorrichtung aufgrund des hohen Gewichtes vergleichsweise umständlich ist und den Benutzer rasch ermüdet. Zudem erweist es sich als schwierig, rasch und problemlos bestimmte Standardinformationen betreffend die mit dem Lesestift erfaßten Kennung rasch aus einer Zentrale abzurufen und peripher zur Verfügung zu stellen. Eine vergleichbare Vorrichtung ist auch aus der GB-A-1 477 099 entnehmbar, bei der die Übermittlung jedoch nicht im infraroten Bereich erfolgt. Schließlich ist noch aus der GB-A-2 068 536 bekannt, über einen Stift die in einem Terminal eingegebenen Informationen von Zeit zu Zeit an eine Computerzentrale weiterzuleiten und den Stift hierbei als Verbindungsstück einzusetzen. Die Informationen werden über Tasten in das Terminal eingegeben.

Hiervon ausgehend hat sich die Erfindung die Weiterentwicklung derartiger Vorrichtungen dahingehend zur Aufgabe gemacht, daß eine leichtere Bedienbarkeit und höhere Nutzungseffektivität erreicht werden kann.

Gelöst wird diese Aufgabe durch die im Kennzeichen des Patentanspruches 1 angegebenen Merkmale. Die mit der Erfindung erreichbaren Vorteile sind vielfältig: So lassen sich durch Betätigen von Sondersignale auslösende Tasten Zusatzinformationen aus der Zentrale abrufen, zum Terminal übertragen und dort zur Anzeige zu bringen. So wird es möglich, durch Tastenbetätigung eine der konkret mit dem Lesestift erfaßten Ware zugehörige Information z.B. Lagerrestbestand dieser Ware oder deren Preis abrufen und zur Anzeige bringen. Es handelt sich also um die Anzeige von Informationen, die nicht über den Lesestift erfaßt sondern aus dem Terminal abgerufen und zur Anzeige gebracht werden. Des weiteren wird die Information der einzelnen Terminals von der Zentrale über ein Abfragesignal dadurch abgerufen, daß die einzelnen Terminals wiederholt und in beliebiger Reihenfolge aufgerufen werden. Entsprechend der Aktivität und der Häufigkeit der übermittelten Informationen lassen sich während des Betriebes sowohl die Reihenfolge der Abfrage der einzelnen Terminals als auch das Zeitintervall pro Terminal, in welchem Empfangsbereitschaft herrscht, verändern und individuell anpassen. Eine wesentliche Erleichterung der Handhabung tritt dadurch ein, daß der der Erfassung dienende Lesestift räumlich getrennt und über eine Leitung mit dem tragbaren Terminal in Verbindung steht, welches seinerseits der Übertragung der Signale dient.

Weitere Fortbildungen und Ausgestaltungen der Erfindung sind in den Unteransprüchen gekennzeichnet und werden nachstehend in Verbindung mit der ein Ausführungsbeispiel darstellenden Figur beschrieben. Diese zeigt in schematisch vereinfachter Darstellung eine erfindungsgemäße Vorrichtung.

Die Ware, deren Ausgabe oder Einlieferung registriert werden soll, ist durch einen Strich-Kode 2 gekennzeichnet, der üblicherweise unmittelbar auf der Ware oder ihrer Verpackung angebracht ist – in Ausnahmefällen auf einem Begleitdokument.

Der Strich-Kode wird in an sich bekannter Weise mit einem Lesestift 3 in Richtung des Pfeiles 4 abgetastet. Dabei wird ein vom Lesestift ausgesendetes Lichtsignal vom Strich-Kode 2 reflektiert, und die in einem im Lesestift angeordneten Sensoren entstehenden elektrischen Signale werden durch eine Drahtleitung 5 einem Terminal 6 zugeführt. Das Terminal enthält einen Infrarotsender 7, dem die über die Drahtleitung 5 zugeführten Signale einem Träger aufmoduliert werden. Der Infrarotsender 7 sendet in Richtung der Pfeile 9 Infrarotsignale aus, die von einem Infrarotempfänger 10 empfangen werden, der an einem sogenannten Relais 11 befestigt oder in dieses integriert ist. Bei der Aufstellung bzw. Anordnung des Relais 11 oder mehrerer gleichartiger Relais ist darauf zu achten, daß diese die vom Infrarotsender 7 des Terminals 6 abgesendeten Infrarotstrahlen gut empfangen können.

Im Relais 11 erfolgt die Umwandlung der Infrarotsignale in elektrische Signale und diese werden über die Drahtleitung 12 zur Zentrale 13 weitergeleitet.

Diese Signale werden einem in der Zentrale 13 befindlichen Prozessor 14 und einem diesem nachgeordneten Speicher 15 zugeführt. Die bei der Abtastung der in einem die Ware kennzeichnenden Strich-Kode 2 erhaltenen Signale werden in dem dieser betreffenden Ware zugeordneten Bereich des Speichers 15 abgespeichert. Gleichzeitig sendet die Zentrale über die Drahtleitung 16 die empfangenen Signale zum Relais 11 und diese werden über den im Relais befindlichen Infrarotsender 17 mittels Infrarotstrahlen zum am Terminal 6 befindlichen Infrarotempfänger 19 geleitet und bewirken eine die Ware kennzeichnende Anzeige im Anzeigefeld 20. Hierdurch hat die den Lesestift 3 handhabende Person eine Kontrolle darüber, daß die ausgesendeten Signale in der Zentrale angekommen sind und außerdem die Möglichkeit, die Richtigkeit der übertragenen Daten zu kontrollieren.

Am Terminal 6 befindet sich eine Anzahl Tasten 22, durch deren Betätigung Sondersignale über die Infrarotstrecke zur Zentrale 13 übertragen werden. So kann beispielsweise durch Betätigung einer entsprechenden Taste ein Error-Signal ausgelöst werden, wenn in dem Anzeigefeld 20 ein Fehler erkennbar ist.

Außerdem besteht die Möglichkeit, durch Betätigung anderer Tasten 22 des Terminals den Auftrag zu geben, den Preis der Ware an das Terminal 6 zu übertragen. In diesem Fall wird die unmittelbar vorhergehende Anzeige im Anzeigefeld 20 gelöscht und nunmehr der Preis angezeigt. Es können aber auch andere, jeweils interessierende Informationen durch Betätigung der zugeordneten Taste abgefragt werden, beispielsweise der Ort, an welchem die Ware gelagert ist bzw. die am Wareneingang eintreffende Ware gelagert werden soll. Es können ferner Informationen über den noch vorhandenen Restbestand an diesen Waren angefordert bzw. abgefragt werden.

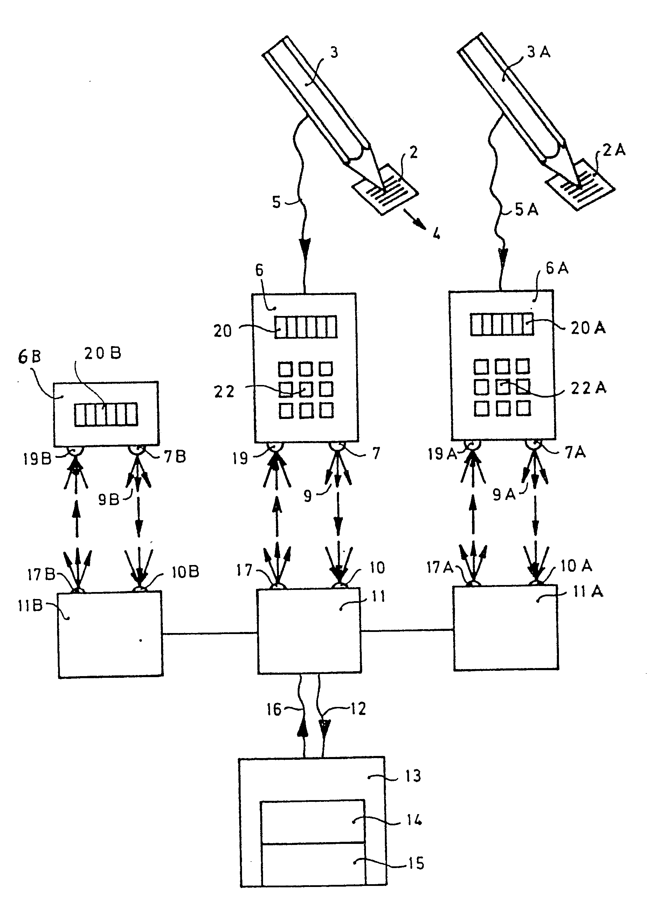

-Die Zentrale 13 kann mit mehreren anderen, üblicherweise gleichartig ausgeführten Relais 11A, 11B zusammenarbeiten, die über entsprechende Leitungen mit dem Relais 11 oder der Zentrale 13 verbunden sind. Diese anderen Relais, z.B. das in der Figur dargestellte Relais 11A, arbeiten mit anderen Terminals 6A usw. zusammen, die üblicherweise gleichartig ausgeführt sind wie das Terminal 6. Es kann auch ein Relais mit mehreren Terminals oder ein Terminal fallweise mit verschiedenen Relais zusammenarbeiten – je nach den vorliegenden räumlichen Gegebenheiten.

Um eine störungsfreie Zusammenarbeit der Zentrale 13 mit mehreren Terminals 6, 6A, 6B zu gewährleisten, sendet die Zentrale in jeweils vorgegebenen, kurzen Abständen von z.B. 50 Millisekunden nacheinander Abfragesignale zu den einzelnen Terminals, welche selbstverständlich eine entsprechende Adresse enthalten. Diese Abfragesignale können entweder periodisch zu allen Terminals in gleichen Abständen gesendet werden oder aber es kann – abweichend hiervon – die Abfrage einzelner Terminals bevorzugt werden.

Beim Eintreffen eines Abfragesignals in dem durch die Adresse gekennzeichneten Terminal wird dort das vom Terminal zur Zentrale zu übertragende Signal ausgelöst bzw. dessen Aussendung freigegeben. Dieses Signal kann entweder das beim Abtasten des Strich-Kodes 2 erhaltene, die Ware kennzeichnende Signal sein oder es kann auch ein Sondersignal sein, das durch Betätigung einer der Tasten 22 bewirkt wird.

Unmittelbar anschließend an die Aussendung eines Abfragesignals ist die Zentrale 13 für eine vorgegebene Zeit, beispielsweise 20 Millisekunden, empfangsbereit für das von diesem Terminal zur Zentrale zu übertragende Signal.

Es können ferner zu Sonderzwecken, beispielsweise zum Zwecke der Überwachung, noch weitere Terminals angeordnet sein, wie in der Figur durch das Terminal 6B angedeutet, welche neben dem Infrarotsender 7B und dem Infrarotempfänger 19B nur ein Anzeigefeld 20B enthalten. Es können auch besondere Einrichtungen im Prozessor 14 und/oder Speicher 15 vorgesehen sein, welche bei Unterschreiten einer vorgegebenen Mindestzahl der noch vorhandenen Waren ein Warnsignal auslösen. Ferner können besondere Einrichtungen im Prozessor 14 und/oder Speicher 15 vorgesehen sein, welche bewirken, daß die Summe der den ausgegebenen Waren zugeordneten Einzelpreise laufend addiert und abgespeichert wird und daß der jeweils abgespeicherte Wert bei Eintreffen eines wahlweise ausgelösten Sondersignals in einem zugeordneten Anzeigefeld angezeigt wird.

Die erfindungsgemäße Vorrichtung bietet den für den praktischen Einsatz wichtigen Vorteil, daß der Lesestift 3 ganz leicht und handlich ausgeführt werden kann, denn die für die Verarbeitung der Signale erforderliche Elektronik ist in anderen Baueinheiten untergebracht. Diese anderen Baueinheiten, insbesondere die Relais 11, die Zentrale 13, der Prozessor 14 und der Speicher 15 sind üblicherweise ortsfest angeordnet, und es besteht praktisch keine Gefahr einer Beschädigung der darin befindlichen Elektronik, während die bei bekannten Anordnungen in Lesestiften vorhandene Elektronik viel leichter beschädigt werden kann, beispielsweise, wenn der Lesestift herunterfällt.

Die erfindungsgemäße Vorrichtung bietet weiterhin den erheblichen Vorteil, daß die wichtigen elektronischen Bauelemente mit mehreren zum Lesestift 3 gleichartigen Lesestiften 3A zusammenarbeiten können, daher bei größeren Anlagen mit mehreren Lesestiften technischer Aufwand eingespart werden kann. Dadurch, daß Lesestift und Infrarotsender räumlich getrennt sind, kann der Lesestift freizügiger in verschiedene Richtungen bewegt werden, ohne daß dadurch die Infrarotübertragung zum Relais beeinträchtigt wird. Durch die räumliche Trennung des Lesestiftes vom Anzeigefeld 20 und den Tasten 22 ist die erfindungsgemäße Vorrichtung in gleicher Weise für Rechtshänder als auch für Linkshänder brauchbar, und als Bedienungspersonal können wahlweise Rechtshänder oder Linkshänder eingesetzt werden.

**Patentansprüche**

1. Vorrichtung zur Kontrolle des Ausganges und/oder Einganges von Waren bestehend aus

a) einem Lesestift (3) zur Abtastung einer eine Ware charakterisierenden Kennung wie z.B. eines Strichcodes (2) und Weiterleitung von dem Strichcode entsprechenden ersten elektrischen Signalen über eine erste Drahtleitung (5),

b) zumindest einem tragbaren Terminal (6, 6A) zur Verarbeitung der ersten elektrischen Signalen und zur Ausgabe von den elektrischen Signalen entsprechenden Informationen an ein Anzeigefeld (20), (20A) des Terminals (6, 6A) zu Kontrollzwecken und mit einem integrierten Infrarotsender (7, 7A), in dem die ersten elektrischen Signale einem Träger aufmoduliert und als IR-Signale abgegeben werden

c) mindestens einem Relais (11, 11A, 11B) mit einem Infrarotempfänger (10, 10A) zur Umsetzung der IR-Signale in zweite elektrische Signale,

d) einer Zentrale (13) mit einem Prozessor (14) und einem Speicher (15),

e) einer zweiten Drahtleitung (12) zur Weiterleitung der zweiten elektrischen Signale an die Zentrale (13) sowie Drahtleitungen (16), durch die die zweiten elektrischen Signale zum Relais (11, 11A, 11B) und von dort über eine IR-Strecke (17, 19) zum Anzeigefeld (20) des Terminals (6, 6A) zurückgeführt werden und

f) am Terminal (6, 6A) angebrachten Tasten (22), auf deren Druck Sondersignale über den integrierten Infrarotsender (7, 7A), den Infrarotempfänger (10, 10A) im Relais (11, 11A) und die zweite Drahtleitung (12) der Zentrale (13) zugeführt werden, dadurch gekennzeichnet, daß bestimmte Sondersignale in der Zentrale (13) das Auslesen im Speicher (15) bereits gespeicherten, der zuletzt gelesenen Kennung zugeordneten Informationen bewirkt, die als Zusatzsignale über die IR-Strecke (17, 19) und das Relais (11, 11A) zum Terminal (6, 6A) übertragen und angezeigt werden, daß die Zentrale (13) gesteuert vom Prozessor (14) zu jedem der Terminals (6, 6A) wiederholt und in beliebiger Reihenfolge ein Abfragesignal sendet, worauf sie für die vom jeweiligen Terminal (6, 6a) abgegebenen Signale für eine jeweils einen Bruchteil einer Sekunde betragende Zeit empfangsbereit ist, daß der Speicher (15) mehrere Bereiche aufweist und die zweiten elektrischen Signale in der Kennung der Ware zugeordneten Bereichen (15) abgespeichert werden und da das tragbare Terminal (6, 6A) vom Lesestift (3, 3a) räumlich entfernt und getrennt angeordnet und mit dem Lesestift (3, 3a) über die erste Drahtleitung (5, 5a) verbunden ist.

2. Vorrichtung nach Anspruch 1, gekennzeichnet durch Einrichtungen im Prozessor (14) und/oder Speicher (15), die nach Empfang eines Sondersignals zur Ermittlung des Restbestandes einer Ware, ein Warnsignal auslösen bei Unterschreiten eines Mindestwertes für den Restbestand.

3. Vorrichtung nach Anspruch 1, gekennzeichnet durch mindestens ein zusätzliches Terminal (6B) mit einem Infrarotempfänger (19B), einem Infrarotsender (7B) und einem Anzeigefeld (20B) zur Anzeige der aus der Zentrale (13) über ein Relais (11B) übermittelten Informationen.

**Claims**

1. Device for control of incoming and/or outgoing goods, comprising

a) a reading pen (3) for scanning an identification mark characterizing said goods, for example a bar code (2), and a first lead wire (5) for transmission of the first electrical signals corresponding to the bar code,

b) at least one portable terminal (6, 6A) for processing the first electrical signals and for output of the information corresponding to said electrical signals on a display panel (20), (20A) of said terminal (6, 6A) for control purposes and having an integrated infra-red transmitter (7, 7A), in which the first electrical signals are modulated onto a carrier and output as infra-red signals,

c) at least one relay (11, 11A, 11B) having an infrared receiver (10, 12A) for converting said infra-red signals into a second electrical signal,

d) a central unit (13) having a processor (14) and a memory (15),

e) a second electrical lead wire (12) for transmitting the second electrical signals to said central unit (13) and lead wires (16) by means of which the second electrical signals are fed back to the relay (11, 11A, 11B), and from there via an infra-red beam (17, 19) a to the display panel (20) of said terminal (6, 6A), and

f) keys (22) disposed on said terminal (6, 6A), the pressing of which transmits signals via the integrated infra-red transmitter (7, 7A), the infra-red receiver (10, 10A) in the relay (11, 11A) and the second lead wire (12) to the central unit (13), wherein certain special signals in the central unit (13) initiate the reading out of the information associated with the last read identification, already stored in said memory (15), which is transmitted via the IR-beam (17, 19) and relay (11, 11A) to said terminal (6, 6A), and displayed, said central unit (13), controlled by processor (14) repeatedly transmits an interrogating signal to each terminal (6, 6A) in random sequence, whereupon for a fraction of a second it becomes ready to receive signals output from the respective terminal (6, 6A), said memory (15) has several areas and the second electrical signals are stored in the memory area (15) allocated to said goods and said portable terminal (6, 6A) is spatially a remote from said reading pen (3, 3A), and is separately located and connected to said reading pen (3, 3A) via the first lead wire (5, 5A).

2. Device according to claim 1 wherein mechanisms in said processor (14) and/or memory (15), which after reception of a special signal for determining the remaining stocks of an item initiate a warning signal if the remaining stocks fall below a minimum quantity.

3. Device according to claim 1 wherein at least one additional terminal (6B) is equipped with an infra-red receiver (19B), an infra-red transmitter (7B) and a display panel (20B) for displaying the information transmitted from the central unit (13) via a relay (11B).

**Revendications**

1. Appareillage pour le contrôle de la sortie et/ou l'entrée de marchandise consistant en

a) un crayon optique (3) qui lit les signes caractérisant une marchandise comme par exemple le code barre (2) et qui transmet les premiers signaux électriques du code barre par un premier fil conducteur (5),

b) au moins un terminal portable (6, 6A) qui travaille les permiers signaux électriques et qui transmet les informations correspondant aux signaux électriques à un écran (20), (20A) du terminal (5, 6A) avec but de contrôle et avec un centre infrarouge (7, 7A) intégré dans lequel les premiers signaux électriques sont modulés sur un porteur et transmis en forme de signaux-IR,

c) au moins un relais (11, 11A, 11B) avec une cellule infrarouge (10, 10A) qui transforme les signaux IR en secondes signaux électriques,

d) un central (13) avec un processeur (14) et une mémoire (15),

e) un deuxième fil conducteur (12) qui transmet les seconds signaux électriques au central (13) et des fils conducteurs (16) par lesquels les seconds signaux électriques sont transmis au relais (11, 11A, 11B) par la voie IR (17, 19) a l'écran (20) du terminal (6, 6A),

f) un clavier (22) fixé au terminal (6, 6A) dont l'utilisation transmet des signaux spéciaux par le centre infrarouge (7, 7A), la cellule infrarouge (10, 10A) dans le relais (11, 11A) et le deuxième fil conducteur (12) au central caractérisé par le fait que certains signaux spéciaux dans le central (13) effectuent la lecture des informations qui sont déjà stockées dans la mémoire et qui ont été attribuées par le caractère lu en dernier, qui sont transmises au terminal (6, 6A et montrées comme des signaux supplémentaire par la voie IR (17, 19) et le relais (11, 11A), que le central (13) commandé par le processeur (14) envoie à chacun des terminaux (6, 6A) et dans un ordre facultatif un signal de demande répétitif, après ça il est prêt pendant un temps infiniment petit à recevoir les signaux envoyés par le terminal respectif (6, 6A), que la mémoire (15) possède plusieurs parties et que les seconds signaux électriques sont mémorisés dans des parties (15) correspondant au type de la marchandise, que le terminal portable (6, 6A) est éloigné dans l'espace et séparé du crayon optique (3, 3A) et lié au crayon optique par le premier fil conducteur (5, 5A).

2. Appareillage d'après demande 1 caractérisé par le fait que le processeur (14) et/ou la mémoire (15) possèdent des installations qui après avoir reçu un signal spécial pour trouver le restant de la marchandise effectuent un signal d'alerte en cas d'infériorité à la valeur minimum du restant.

3. Appareillage d'après demande 1 caractérisé par au moins un terminal supplémentaire (6B) avec une cellule infrarouge (19B), un centre infrarouge (7B) et un écran (20B) pour montrer les informations transmises du central (13) par un relais (11B).